# EUROPÄISCHE PATENTSCHRIFT

(11) **EP 2 403 729 B1**
(45) Veröffentlichungstag und Bekanntmachung des Hinweises auf die Patenterteilung: **19.06.2013**
(21) Anmeldenummer: 10706482.6
(22) Anmeldetag: 21.01.2010
(51) Int. Cl.: B60J 7/05

(54) **FAHRZEUGDACH MIT ANTRIEBSSCHLITTEN FÜR DECKELELEMENT**
VEHICLE SUNROOF WITH DRIVING SLIDE
ÉLÉMENT DE TOIT DE VÉHICULE AVEC CHARIOT DE PROPULSION

(30) Priorität: 03.03.2009 DE 102009011472
(43) Veröffentlichungstag der Anmeldung: 11.01.2012
(73) Patentinhaber: Webasto AG, 82131 Stockdorf (DE)
(72) Erfinder: FÄRBER, Manfred, 82407 Wielenbach (DE); RACINE, Lloyd, George, 487316 Michigan (US); BUTSUEN, Tsukasa, Higashi-Hiroshima City, Hiroshima-kw, (JP)
(74) Vertreter: advotec.
(86) Internationale Anmeldenummer: PCT/DE2010/000064
(87) Internationale Veröffentlichungsnummer: WO 2010/099768

(56) Entgegenhaltungen:
- DE-A1- 10 024 829
- DE-A1-102006 060 369

## Beschreibung

Die Erfindung betrifft ein Fahrzeugdach mit mindestens einem eine Dachöffnung wahlweise verschließenden oder zumindest teilweise freigebenden Deckelelement nach dem Oberbegriff des Patentanspruchs 1.

Ein derartiges Fahrzeugdach ist aus der Druckschrift DE 10 2006 060 369 A1 bekannt und umfasst ein Deckelelement, das entlang seiner bezogen auf eine Fahrzeuglängsmittelebene seitlichen Ränder jeweils ein Trägerelement aufweist, das einen Schwenk- bzw. Ausstellarm für das Deckelelement darstellt. In dachfester Weise sind entlang der seitlichen Ränder der Dachöffnung Führungsschienen angeordnet, in denen beim Betätigen des Deckelelements jeweils eines der Trägerelemente verschiebbar geführt ist. Des Weiteren ist in den Führungsschienen jeweils ein Antriebsschlitten geführt, der zum Verschwenken des Deckelelements mit einem Führungssteg zusammenwirkt, der an dem jeweils zugeordneten Trägerelement des Deckelelements angeordnet ist. Der Führungssteg bildet eine Kurvenbahn bzw. Steuerbahn, so dass ein Verfahren der Antriebsschlitten in Fahrzeuglängsrichtung ein Verschwenken des Deckelelements bewirkt. Insbesondere kann das Deckelelement zwischen einer Schließstellung, in der die Dachöffnung komplett geschlossen ist, einer Lüfterstellung, in der ein heckseitiger Rand des Deckelelements gegenüber einem heckseitigen, festen Dachabschnitt ausgestellt ist, und einer Verschiebestellung verschwenkt werden, in welcher das Deckelelement zur Freigabe der Dachöffnung in Fahrzeuglängsrichtung unter den heckseitigen, festen Dachabschnitt verfahren werden kann. Gesichert wird das Deckelelement gegen ein Verfahren in Fahrzeuglängsrichtung während des Schwenkvorgangs durch einen Verriegelungshebel, der mit einer an der jeweiligen Führungsschiene ausgebildeten Ausnehmung zusammenwirkt.

Der Erfindung liegt die Aufgabe zugrunde, ein Fahrzeugdach der einleitend genannten Gattung zu schaffen, das sich durch eine geringe Bauteilanzahl auszeichnet.

Diese Aufgabe ist erfindungsgemäß durch das Fahrzeugdach mit den Merkmalen des Patentanspruchs 1 gelöst.

Der Kern der Erfindung besteht mithin darin, dass die Antriebsschlitten des Fahrzeugdachs jeweils ein Führungselement aufweisen, an dem der jeweils zugeordnete Führungssteg beim Verschwenken des Deckelelements gleitet und das zudem dazu dient, das Deckelelement durch Eingriff in eine korrespondierende Ausnehmung an dessen Deckelträger als Mitnehmerelement in Fahrzeuglängsrichtung zu verfahren. Es muss also keine Übergabe des Deckelelementträgers an verschiedene Schalt- bzw. Führungselemente der Antriebskinematik erfolgen. Vielmehr kann die Steuerung beim Betätigen des Deckelelements, d.h. beim Absenken und Verfahren des Deckelelements, in einem Bewegungsablauf erfolgen. Zur Betätigung des Deckelelements sind nur der Antriebsschlitten mit seinem eine Doppelfunktion aufweisenden Führungs- bzw. Mitnehmerelement und der deckelfest ausgebildete Deckelelementträger mit dem Führungssteg und der Mitnehmerausnehmung erforderlich. Das System nach der Erfindung kann also eine geringe Anzahl an Bauteilen aufweisen, was sich hinsichtlich Montagezeiten, hinsichtlich Kosten und auch hinsichtlich der Bauteiltoleranzen positiv auswirkt. Da, wie schon vorstehend ausgeführt, bei dem Fahrzeugdach nach der Erfindung beim Öffnen bzw. Schließen der Dachöffnung keine Übergabe zwischen verschiedenen Schaltelementen des Deckelantriebs erfolgen muss, bestehen auch Vorteile hinsichtlich der Auslegung eines Einklemmschutzsystems, da dieses hier keine nicht differenzierten Kraftwerte bearbeiten muss.

Das Fahrzeugdach nach der Erfindung weist einen kostengünstigen, vorzugsweise einteiligen Deckelelementträger auf Es ist kein zusätzliches Steuerteil, wie ein Steuerhebel zum Schalten der verschiedenen Schwenkstellungen des Deckelelements erforderlich. Da kein Steuerteil vorliegt, entfallen auch gegebenenfalls aufwändige, ansonsten hierfür erforderliche Fräsprozesse an der Führungsschiene. Die durch den Führungssteg realisierte Stegführung zeichnet sich des Weiteren durch eine geringe Bauhöhe aus, die einen exakten Schaltmechanismus mit einer kinematisch genauen Auslegung darstellt. Bis zu einem Umschalten vom Verschwenkvorgang in den Verfahrvorgang erfolgt beim Verfahren des Antriebsschlittens ein langsames Abtauchen des Deckelelements in seine abgesenkte Verschiebestellung. Beim Verfahren des Deckelelements in Fahrzeuglängsrichtung liegt eine große Überdeckung zwischen dem an dem Antriebsschlitten ausgebildeten Führungselement und der Mitnehmerausnehmung in Fahrzeughochrichtung vor. Auch kann eine flächige Krafteinleitung in den Deckelelementträger beim Verfahren in Fahrzeuglängsrichtung erfolgen.

Bei einer bevorzugten Ausführungsform des Fahrzeugdachs nach der Erfindung sind die Mitnehmerausnehmungen jeweils von einer Kunststoffumspritzung des jeweiligen Trägerelements gebildet, die auch den an dem jeweiligen Trägerelement ausgebildeten Führungssteg bildet. Die Mitnehmerausnehmungen sind mithin integraler Bestandteil des jeweiligen Führungsstegs. Insbesondere taucht das als Mitnehmerelement dienende Führungselement beim Verschwenken des Deckelelements in seine abgesenkte Verschiebestellung am Ende des Schwenkvorgangs in die Mitnehmerausnehmung ein, so dass ein weiteres Verfahren des Antriebsschlittens in Richtung Fahrzeugheck zu einem Verfahren des Deckelelements in Richtung Fahrzeugheck führt. Beim Verfahren des Deckelelements aus der Öffnungsstellung in seine Schließstellung erfolgt der Bewegungsablauf umgekehrt, d.h. zunächst wird das Deckelelement durch das in die Mitnehmerausnehmung eingreifende Führungselement in Richtung Fahrzeugbug verschoben und dann gleitet das Führungselement weiter entlang dem Führungssteg, so dass das Deckelelement in seine Schließstellung nach oben verschwenkt wird.

Um ein leichtgängiges Eintauchen des als Mitnehmerelement dienenden Führungselements in die zugeordnete Mitnehmerausnehmung und einen präzisen Schaltvorgang zu gewährleisten, weisen die Mitnehmerausnehmungen bei einer vorteilhaften Ausführungsform des Fahrzeugdachs nach der Erfindung jeweils eine bugseitige und eine heckseitige Begrenzungsfläche auf, die jeweils nach oben in Richtung Fahrzeugheck geneigt sind und ein positionsgenaues Ein- und Ausfahren des Führungselements in bzw. aus der Mitnehmerausnehmung gewährleisten.

Da im Bereich der Mitnehmerausnehmung beim Verfahren des Deckelelements in Fahrzeuglängsrichtung keine bzw. nur geringe Kräfte in Fahrzeughochrichtung auf die Kunststoffumspritzung wirken, die den Führungssteg und die Mitnehmerausnehmung bildet, ist die Kunststoffumspritzung bei einer bevorzugten Ausführungsfonn im Bereich der Mitnehmerausnehmung in Fahrzeughochrichtung verjüngt. Damit kann die Gesamtbauhöhe des Trägerelements gering gehalten werden. Insbesondere kann die Mitnehmerausnehmung durch die Materialverjüngung gebildet sein.

Zur Sicherung des Deckelelements gegen ein Verfahren in Richtung der Erstreckung der Führungsschienen sind bei einer vorteilhaften Ausfiihrungsform des Fahrzeugdachs nach der Erfindung an den Trägerelementen des Deckelelements jeweils mindestens ein bugseitiges Riegelelement und mindestens ein heckseitiges Riegelelement ausgebildet, die mit korrespondierenden Widerlagern zusammenwirken, die dachfest ausgebildet sind. Vorzugsweise sind die Riegelelemente beim Verfahren des Deckelelements in Fahrzeuglängsrichtung in einem Führungskanal der jeweiligen Führungsschiene geführt, so dass sie das Deckelelement dann gegen ein Verschwenken sichern.

Die Sicherung des Deckelelements gegen ein Verfahren in Fahrzeuglängsrichtung kann insbesondere ohne zusätzliche Bauteile realisiert werden, wenn die Riegelelemente jeweils mit einer Aussparung bzw. Ausnehmung einer oberseitigen Wand der jeweiligen Führungsschiene zusammenwirken. Die Ränder der Ausnehmungen bilden dann jeweils das dachfeste Widerlager.

Bei einer besonders kostengünstigen Ausführungsform des Fahrzeugdachs nach der Erfindung sind die Antriebsschlitten jeweils als Kunststoffspritzgießteil ausgebildet, an dem das jeweilige als Mitnehmerelement dienende Führungselement ausgeformt ist.

Vorzugsweise weisen die als Kunststoffspritzgießteil ausgebildeten Antriebsschlitten jeweils eine in einstückiger Weise ausgeformte Führungsklaue auf, die den jeweils zugeordneten Führungssteg umgreift und deren Boden von dem Führungs- bzw. Mitnehmerelement gebildet ist.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdaches nach der Erfindung ist in der Zeichnung schematisch vereinfacht dargestellt und wird in der nachfolgenden Beschreibung näher erläutert. Es zeigt:

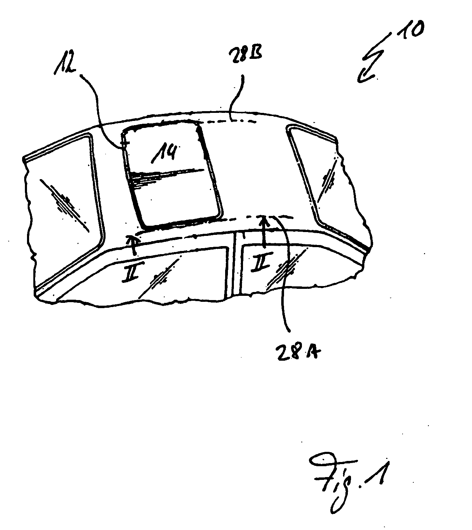

Fig. 1 eine perspektivische Draufsicht auf ein Fahrzeugdach nach der Erfindung mit einem Dachöffnungssystem;
Fig. 2 einen schematischen Längsschnitt durch das Dachöffnungssystem im Bereich von dessen Antriebsmechanik entlang der Linie II-II in Fig. 1 in Schließstellung eines Deckelelements;
Fig. 3 eine Fig. 2 entsprechende Ansicht, jedoch in Lüfterstellung des Deckelelements;
Fig. 4 eine Fig. 2 entsprechende Ansicht, jedoch in einer abgesenkten Verschiebestellung des Deckelelements;
Fig. 5 eine vergrößerte Ansicht eines heckseitigen Abschnitts des Deckelelements in dessen Schließstellung zusammen mit einem Antriebsschlitten;
Fig. 6 eine Fig. 5 entsprechende Ansicht, jedoch bei einem geringfügig abgesenkten Deckelelement;
Fig. 7 ebenfalls eine Fig. 5 entsprechende Ansicht, jedoch bei einem gegenüber Fig. 6 noch weiter abgesenkten Deckelelement;
Fig. 8 ebenfalls eine Fig. 5 entsprechende Ansicht, jedoch kurz vor Erreichen einer Mitnehmerausnehmung des Deckelelements;
Fig. 9 ebenfalls eine Fig. 5 entsprechende Ansicht, jedoch beim Eintauchen eines Mitnehmerelements in die Mitnehmerausnehmung; und
Fig. 10 ebenfalls eine Fig. 5 entsprechende Ansicht, jedoch nach Erreichen der abgesenkten Verschiebestellung des Deckelelements.

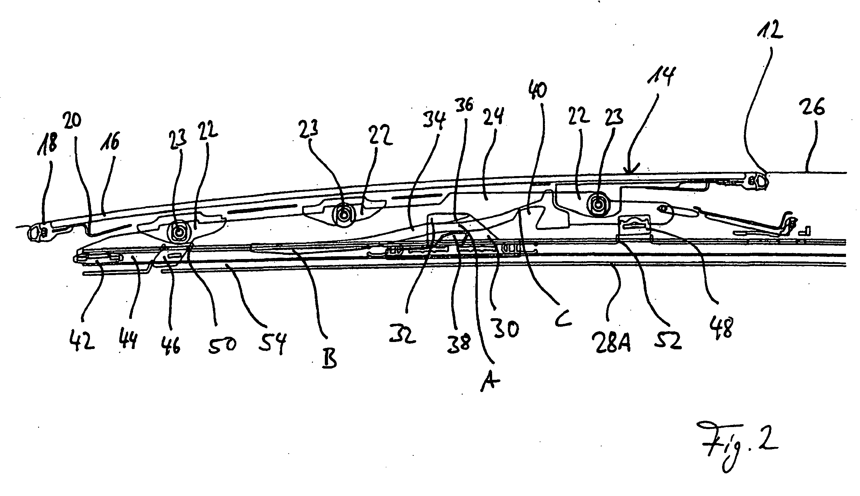

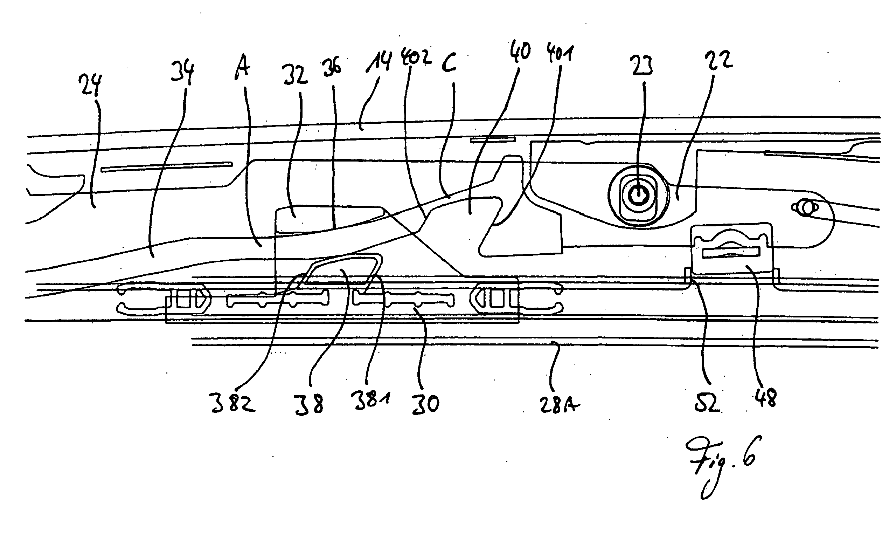

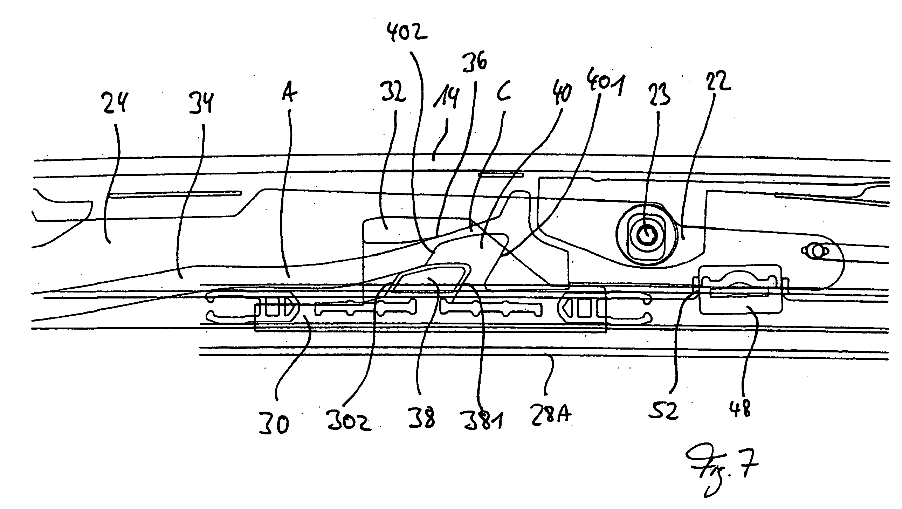

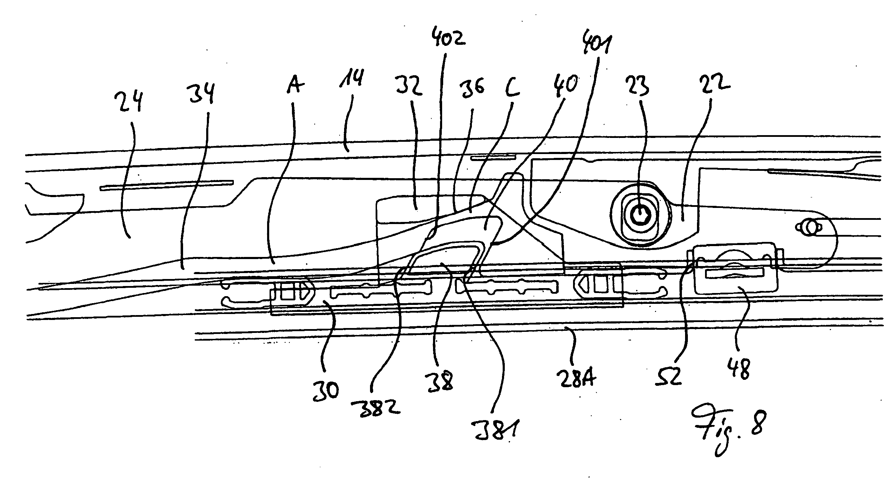

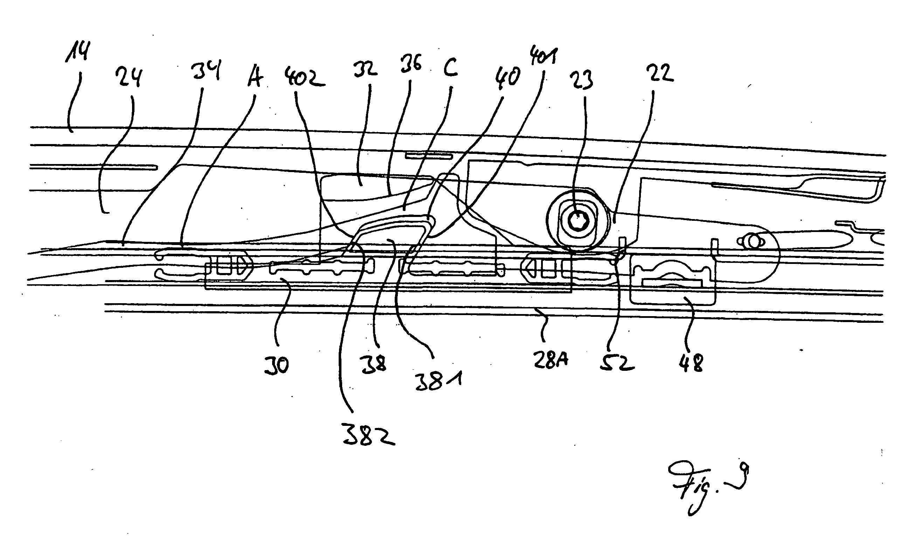

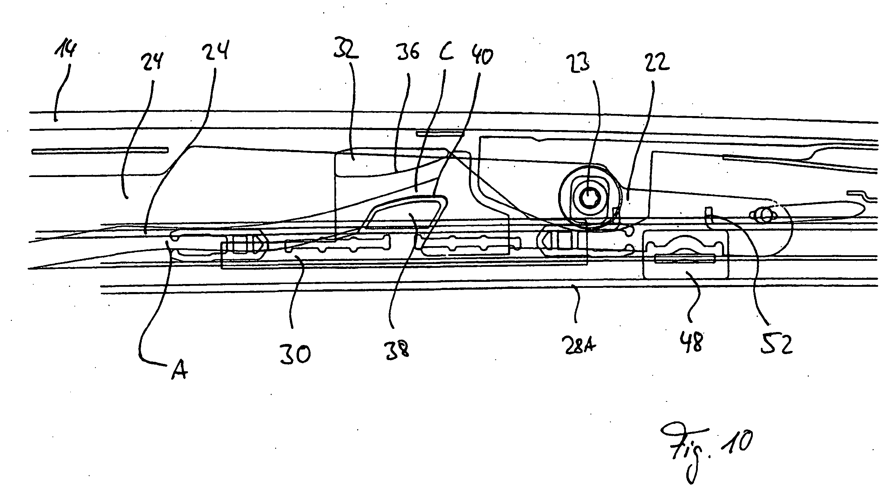

In der Zeichnung ist ein Fahrzeugdach 10 eines Personenkraftwagens dargestellt, das mit einer Dachöffnung 12 versehen ist, die mittels eines Deckelelements 14 wahlweise verschlossen oder zumindest teilweise freigegeben werden kann. Das Deckelelement 14 ist Bestandteil eines anhand der Figuren 2 bis 10 detailliert dargestellten Dachöffnungssystems und umfasst einen Glaskörper 16, der mit einem aus einem Polyurethanschaum gebildeten Rahmen 18 versehen ist, in welchem ein Deckelinnenblech 20 eingebettet ist. Das Deckelinnenblech 20 weist Befestigungslaschen 22 auf, die gegenüber dem Glaskörper 16 rechtwinkelig nach unten abstehen und zur Anbindung des Deckelelements 14 an beidseits einer Fahrzeuglängsmittelebene an den seitlichen Rändern des Deckelelements 14 angeordnete Deckelelementträger 24 dienen, die Bestandteil einer Verstelleinrichtung für das Deckelelement 14 sind. Die Befestigungslaschen 22 sind jeweils über eine Schraube 23 mit dem jeweiligen Deckelelementträger 24 verschraubt.

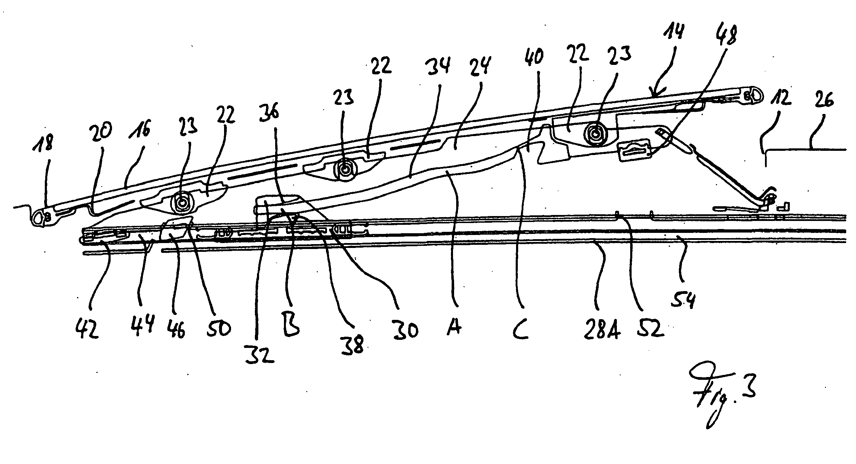

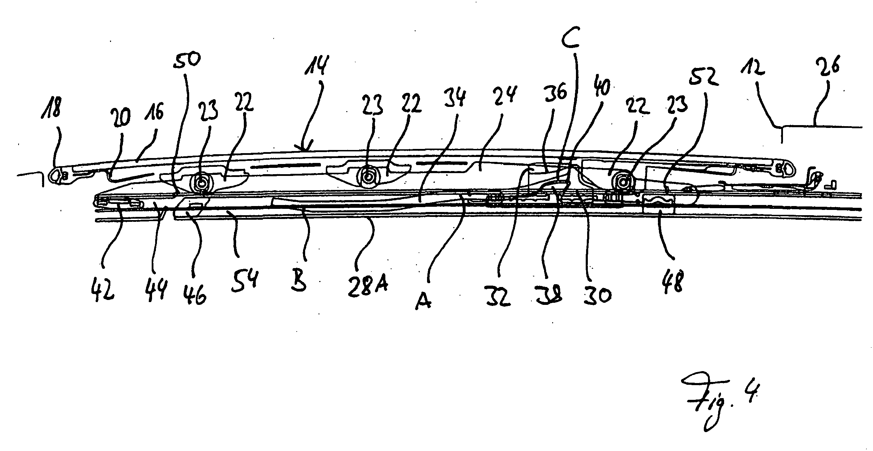

Mittels der Verstelleinrichtung kann das Deckelelement zwischen einer in Fig. 2 dargestellten Schließstellung, in der die Dachöffnung 12 geschlossen ist, einer in Fig. 3 dargstellten Lüfterstellung, in welcher ein heckseitiger Rand des Deckelelements 14 gegenüber einem heckseitigen festen Dachabschnitt 26 ausgestellt ist, und einer in Fig. 4 dargestellten, abgesenkten Verschiebestellung verschwenkt werden, in welcher das Deckelelement 14 entlang von Führungsschienen 28A und 28B, die sich entlang der seitlichen Ränder der Dachöffnung 12 fahrzeugfest erstrecken, unter den heckseitigen festen Dachabschnitt 26 verfahren werden kann.

Nachfolgend wird die Verstelleinrichtung nur anhand des in Vorwärtsfahrtrichtung links angeordneten Verstelleinrichtungsbereichs erläutert. Der in Vorwärtsfahrtrichtung rechts angeordnete Verstelleinrichtungsbereich ist korrespondierend zu diesem spiegelsymmetrisch bezüglich der Fahrzeuglängsmittelebene ausgebildet.

Die Verstelleinrichtung umfasst beidseits der Fahrzeuglängsmittelebene jeweils einen Antriebsschlitten 30, der in der Führungsschiene 28A in Fahrzeuglängsrichtung verschiebbar geführt ist und mittels eines hier nicht näher dargestellten drucksteifen Antriebskabels angetrieben ist. Der Antriebsschlitten 30 ist ein Kunststoffspritzgießbauteil und umfasst einen Klauenabschnitt 32, der einen an dem Deckelelementträger 24 unterseitig ausgebildeten Führungssteg 34 umgreift, der eine Kunststoffumspritzung des im Übrigen aus Stahl gefertigten Deckelelementträgers 24 darstellt. Der Deckelelementträger 24 hat so einen im Wesentlichen T-förmigen Querschnitt. Ein vertikaler Abschnitt 35 des Deckelelementträgers 24 durchgreift einen von dem Klauenabschnitt 32 gebildeten Spalt an der Oberseite des Antriebsschlittens 30.

Der Klauenabschnitt 32 des Antriebsschlittens 30 umfasst eine obere Führungsfläche 36, die an der Oberseite des Führungsstegs 34 anliegt und ein Führungselement 38, das eine unterseitige Führungsfläche 383 bildet, auf dem der Führungssteg 34 aufliegt. Das Führungselement 38 hat eine vordere Begrenzungsfläche 382 und eine hintere Begrenzungsfläche 381, die jeweils in Fahrzeugheckrichtung geneigt sind und über die gekrümmt ausgebildete, an der Unterseite des Führungsstegs 34 anliegende Führungsfläche 383 miteinander verbunden sind.

Die Kunststoffumspritzung, die den Führungssteg bildet, hat einen mehrfach gekrümmten Verlauf, so dass ein Verfahren des Antriebsschlittens 30 in der Führungsschiene 28A durch das Zusammenwirken des Führungsstegs 34 mit der oberen Führungsfläche 36 und der von dem Führungselement 38 gebildeten Führungsfläche ein Verschwenken des Deckelelements 14 bewirkt. In einem heckseitigen Abschnitt ist der Führungssteg 34 mit einer so genannten Mitnehmerausnehmung 40 versehen, deren Form in Fahrzeuglängsrichtung der Form des Führungselements 38 des Antriebsschlittens 30 in Fahrzeuglängsrichtung entspricht. Die Mitnehmerausnehmung 40 ist durch eine Materialverjüngung des Führungssteges 34 in Fahrzeughochrichtung gebildet. Wie Fig. 4 zu entnehmen ist, taucht das Führungselement 38 in der abgesenkten Verschiebestellung des Deckelelements 14 als Mitnehmerelement in die Mitnehmerausnehmung 40 ein. Auch die Mitnehmerausnehmung hat mithin eine bugseitige Begrenzungsfläche 402 und eine heckseitige Begrenzungsfläche 401, welche jeweils in Richtung Fahrzeugheck geneigt sind.

Das Trägerelement 24 weist des Weiteren neben einem bugseitigen Gleiter 42, der in einem Führungskanal 44 der Führungsschiene 28A geführt ist und eine Schwenkachse des Deckelelements 14 definiert, ein bugseitiges Riegelelement 46 und ein heckseitiges Riegelelement 48 auf, welche jeweils in Fahrzeugquerrichtung vorstehen und beim Verschwenken des Deckelelements 14 dieses durch Zusammenwirken mit oberseitigen Ausnehmungen 50 bzw. 52 der Führungsschiene 28A gegen ein Verfahren in Fahrzeuglängsrichtung sichern. In der in Fig. 4 dargestellten Verschiebestellung, das heißt in der abgesenkten Stellung des Deckelelements 14, sind die Riegelelemente 46 und 48 in einem Führungskanal 54 der Führungsschiene 28A angeordnet, so dass sie das Deckelelement 14 bei dessen Verfahren in Fahrzeuglängsrichtung gegen ein Verschwenken um eine im Bereich eines vorderen Randes angeordnete, sich in Fahrzeugquerrichtung erstreckende Achse sichert.

Das in der Zeichnung dargestellte Dachöffnungssystem arbeitet in nachfolgend beschriebener Weise.

Ausgehend von der in Fig. 2 dargestellten Schließstellung des Deckelelements 14, in welcher der Klauenabschnitt 32 des Antriebsschlittens 30 in einem im Wesentlichen horizontalen Bereich A des Führungsstegs 34 anliegt, wird der Antriebsschlitten 30 beim Verschwenken des Deckelelements 14 in seine in Fig. 3 dargestellte Lüfterstellung in Richtung Fahrzeugbug in einen Bereich B des Führungsstegs 34 verfahren, der gegenüber dem Bereich A in Richtung Fahrzeugbug abfällt, so dass durch Zusammenwirken des Klauenabschnitts 32 mit dem vom Fahrzeugheck aus betrachtet im Wesentlichen abfallenden Führungssteg 34 der heckseitige Rand des Deckelelements 14 gegenüber dem festen Dachabschnitt 26 nach oben ausgestellt wird.

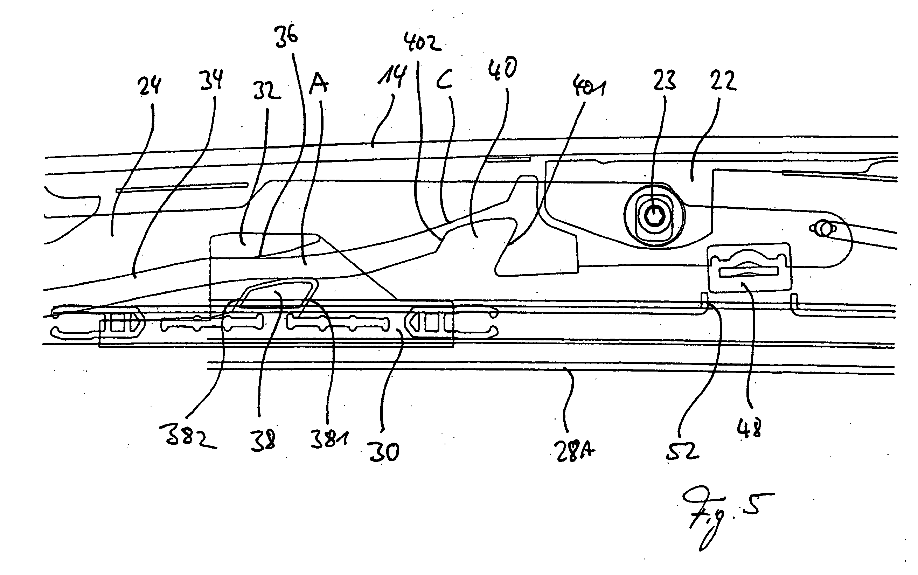

Soll das Deckelelement 14 zur Freigabe der Dachöffnung 12 unter den heckseitigen festen Dachabschnitt 26 verfahren werden, wird der Antriebsschlitten 30 ebenfalls ausgehend von der in Fig. 2 dargestellten Schließstellung in Richtung Fahrzeugheck in einen Bereich C des Führungsstegs 34 verfahren, der gegenüber dem mittleren Bereich A in Richtung Fahrzeugheck ansteigt, so dass das Führungselement 38 entlang dem unteren Rand des Führungsstegs 34 gleitet und in die Mitnehmerausnehmung 40 eintaucht. Der hierbei erfolgende Bewegungsablauf ist in den Figuren 5 bis 10 schrittweise dargestellt. Zu Beginn des Eintauchvorgangs schlägt die heckseitige Fläche 381 des Führungselements 38 an der heckseitigen Begrenzungsfläche 401 der Mitnehmerausnehmung 40 an. Durch die jeweils in Richtung Fahrzeugheck geneigte Ausrichtung dieser Flächen 381,401 gleitet bei einem Weiterverfahren des Antriebsschlittens 30 in Heckrichtung der Deckelelementträger 24 entlang der Fläche 381 nach unten, so dass das Deckelelement 14 um die von dem vorderen Gleiter 42 gebildete Schwenkachse verschwenkt und abgesenkt wird. Beim Eintauchen des Führungselements 38 in die Mitnehmerausnehmung 40 entfernt sich die obere Führungsfläche 36 von dem Führungssteg 34 (vgl. Figuren 4, 9 und 10). Hierdurch wird das Deckelelement 14 unter das Niveau des festen Dachabschnitts 26 abgesenkt, so dass die Riegelelemente 46 und 48 außerhalb der oberseitigen Ausnehmungen 50 und 52 der Führungsschiene 28A und vollständig in dem Führungskanal 54 der Führungsschiene 28A liegen. Bei einem Weiterverfahren des Antriebsschlittens 30 wirkt dann das Führungselement 38, das in der Mitnehmerausnehmung 40 der den Führungssteg 34 bildenden Kunststoffumspritzung liegt, als Mitnehmer, der das Verfahren des Deckelelements 14 in Fahrzeuglängsrichtung bewirkt. Das Führungselement des Antriebsschlittens 30 steuert also den Führungssteg 34 des Deckelelementträgers 24, so dass die Riegelelemente 46 und 48 schaltgenau durch die Ausnehmungen 50 und 52 der Führungsschiene 28 und in den Führungskanal 54 der Führungsschiene 28A einfahren und das Deckelelement 14 verfahren werden kann. Beim Schließen der Dachöffnung 12, d.h. beim Verfahren des Deckelelements 14 aus der zurückgefahrenen Öffnungsstellung in die Schließstellung wird die Schwenkbewegung des Deckelelements 14 nach Erreichen eines vorderen Anschlags des Deckelelements 14 durch das Zusammenwirken der bugseitigen Begrenzungsfläche 382 des Führungselements 38 und der bugseitigen Begrenzungsfläche 402 der Mitnehmerausnehmung ausgelöst. Das Deckelelement wird so nach oben in seine die Dachöffnung 12 verschließende Schließstellung verschwenkt. Das Führungselement 38 des Antriebsschlittens 30 liegt dann wieder im Bereich A des Führungsstegs 34.

### Bezugszeichenliste

| | |
|---|---|
| 10 | Fahrzeugdach |
| 12 | Dachöffnung |
| 14 | Deckelelement |
| 16 | Glaskörper |
| 18 | Rahmen |
| 20 | Deckelinnenblech |
| 22 | Befestigungslaschen |
| 23 | Schraube |
| 24 | Deckelelementträger |
| 26 | Dachabschnitt |
| 28A,B | Führungsschienen |
| 30 | Antriebsschlitten |
| 32 | Klauenabschnitt |
| 34 | Führungssteg |
| 36 | oberseitige Führungsfläche |
| 38 | Führungselement |
| 381 | Begrenzungsfläche |
| 382 | Begrenzungsfläche |
| 383 | Führungsfläche |
| 40 | Mitnehmerausnehmung |
| 401 | Begrenzungsfläche |
| 402 | Begrenzungsfläche |
| 42 | Gleiter |
| 44 | Führungskanal |
| 46 | Riegelelement |
| 48 | Riegelelement |
| 50 | Ausnehmung |
| 52 | Ausnehmung |
| 54 | Führungskanal |

## Patentansprüche

1. Fahrzeugdach mit mindestens einem eine Dachöffnung (12) wahlweise verschließenden oder zumindest teilweise freigebenden Deckelelement (14), das bezogen auf eine Fahrzeuglängsmittelebene beidseits jeweils ein Trägerelement (24) aufweist, das einen Führungssteg (34) umfasst, der mit einer Verstelleinrichtung zusammenwirkt, die in einer Führungsschiene (28A,28B) geführt ist und einen Antriebsschlitten (30) umfasst, der mit dem Führungssteg (34) zumindest zum Verschwenken des Deckelelements (14) zusammenwirkt und ein Führungselement (38) umfasst, auf dem der Führungssteg (34) aufliegt, **dadurch gekennzeichnet, dass** die Führungselemente (38) der Antriebsschlitten (30) beim Verfahren des Deckelelements (14) in Fahrzeuglängsrichtung jeweils als Mitnehmerelement dienen, das in eine an dem jeweils zugeordneten Trägerelement (24) des Deckelelements (14) ausgebildete, korrespondierende Mitnehmerausnehmung (40) eingreift.

2. Fahrzeugdach nach Anspruch 1, **dadurch gekennzeichnet, dass** die Mitnehmerausnehmungen (40) jeweils von einer Kunststoffumspritzung des jeweiligen Trägerelements (24) gebildet sind, die den an dem jeweiligen Trägerelement (24) ausgebildeten Führungssteg (34) bildet.

3. Fahrzeugdach nach Anspruch 1 oder 2, **dadurch gekennzeichnet, dass** die Mitnehmerausnehmungen (40) jeweils eine bugseitige und eine heckseitige Begrenzungsfläche aufweisen, die jeweils in Fahrzeugheckrichtung nach oben geneigt sind und ein positionsgenaues Ein- und Ausfahren des jeweiligen Führungselements (38) des jeweiligen Antriebsschlittens (30) in bzw. aus der betreffenden Mitnehmerausnehmung (40) gewährleisten.

4. Fahrzeugdach nach Anspruch 2, **dadurch gekennzeichnet, dass** die Kunststoffumspritzung im Bereich der Mitnehmerausnehmung (40) in Fahrzeughochrichtung verjüngt ist.

5. Fahrzeugdach nach einem der Ansprüche 1 bis 4, **dadurch gekennzeichnet, dass** an dem Trägerelement (24) ein bugseitiges Riegelelement (46) und ein heckseitiges Riegelelement (48) ausgebildet sind, welche das Deckelelement (14) bei dessen Verschwenken und in dessen Schließstellung gegen ein Verfahren in Fahrzeuglängsrichtung sichern und beim Verfahren des Deckelelements (14) in einem Führungskanal (54) der jeweiligen Führungsschiene (28A,28B) geführt sind und das Deckelelement (14) gegen ein Verschwenken sichern.

6. Fahrzeugdach nach Anspruch 5, **dadurch gekennzeichnet, dass** die Riegelelemente (46,48) jeweils mit einer Ausnehmung (50,52) der Führungsschiene (28A,28B) zusammenwirken.

7. Fahrzeugdach nach einem der Ansprüche 1 bis 6, **dadurch gekennzeichnet, dass** die Antriebsschlitten (30) jeweils als Kunststoffspritzgießteil ausgebildet sind.

## Claims

1. Vehicle roof with at least one cover element (14) which optionally closes or at least partially opens up a roof opening (12) and has a carrier element (24) on both sides of a longitudinal center plane of the vehicle, the carrier element comprising a guide web (34) which interacts with a displacement device which is guided in a guide rail (28A, 28B) and comprises a drive carriage (30), which interacts with the guide web (34) at least to pivot the cover element (14) and comprises a guide element (38) on which the guide web (34) rests, **characterized in that**, as the cover element (14) moves in the longitudinal direction of the vehicle, said guide elements (38) of the drive carriages (30) each serve as a carry-along element which engages in a corresponding carry-along recess (40) formed on the respectively assigned carrier element (24) of the cover element (14).

2. Vehicle roof according to Claim 1, **characterized in that** the carry-along recesses (40) are each formed by a plastics insert molding of the respective carrier element (24), said plastics insert molding forming the guide web (34) formed on the respective carrier element (24).

3. Vehicle roof according to Claim 1 or 2, **characterized in that** the carry-along recesses (40) each have a front and a rear boundary surface which are each inclined upward in the rear direction of the vehicle and ensure a positionally precise entry and exit of the respective guide element (38) of the respective drive carriage (30) into and out of the relevant carry-along recess (40).

4. Vehicle roof according to Claim 2, **characterized in that** the plastics insert molding is tapered in the vertical direction of the vehicle in the region of the carry-along recess (40).

5. Vehicle roof according to one of Claims 1 to 4, **characterized in that** a front locking element (46) and a rear locking element (48) are formed on the carrier element (24), which locking elements secure the cover element (14) during the pivoting thereof and in the closed position thereof against moving in the longitudinal direction of the vehicle and, as the cover element (14) moves, are guided in a guide channel (54) of the respective guide rail (28A, 28B) and secure the cover element (14) against pivoting.

6. Vehicle roof according to Claim 5, **characterized in that** the locking elements (46, 48) each interact with a recess (50, 52) of the guide rail (28A, 28B).

7. Vehicle roof according to one of Claims 1 to 6, **characterized in that** the drive carriages (30) are each designed as a plastics injection molded part.

## Revendications

1. Toit de véhicule comprenant au moins un élément de recouvrement (14) fermant ou au moins partiellement libérant de manière sélective une ouverture de toit (12), lequel élément de recouvrement comprend, par rapport à un plan médian longitudinal du véhicule, un élément de support (24) respectif des deux côtés, lequel élément de support comporte une nervure de guidage (34) qui coopère avec un dispositif de réglage qui est guidé dans un rail de guidage (28A, 28B) et comporte un chariot d'entraînement (30) qui coopère avec la nervure de guidage (34) au moins pour le pivotement de l'élément de recouvrement (14) et comporte un élément de guidage (38) sur lequel repose la nervure de guidage (34), **caractérisé en ce que** les éléments de guidage (38) des chariots d'entraînement (30) servent respectivement d'élément d'entraînement lors du déplacement de l'élément de recouvrement (14) dans la direction longitudinale du véhicule, lequel élément d'entraînement vient en prise dans un évidement d'entraînement (40) correspondant réalisé sur l'élément de support (24) associé respectif de l'élément de recouvrement (14).

2. Toit de véhicule selon la revendication 1, **caractérisé en ce que** les évidements d'entraînement (40) sont formés respectivement par un surmoulage en matière plastique de l'élément de support (24) respectif, lequel surmoulage en matière plastique forme la nervure de guidage (34) réalisée sur l'élément de support (24) respectif.

3. Toit de véhicule selon la revendication 1 ou 2, **caractérisé en ce que** les évidements d'entraînement (40) comprennent respectivement une surface de limitation située du côté avant et une surface de limitation située du côté arrière qui sont respectivement inclinées vers le haut en direction de l'arrière du véhicule et garantissent une entrée et une sortie en position exacte de l'élément de guidage (38) respectif du chariot d'entraînement (30) respectif dans l'évidement d'entraînement (40) concerné ou hors de celui-ci.

4. Toit de véhicule selon la revendication 2, **caractérisé en ce que** le surmoulage en matière plastique est rétréci en direction du haut du véhicule dans la région de l'évidement d'entraînement (40).

5. Toit de véhicule selon l'une quelconque des revendications 1 à 4, **caractérisé en ce qu'**un élément de verrouillage (46) situé du côté avant et un élément de verrouillage (48) situé du côté arrière sont réalisés sur l'élément de support (24), lesquels éléments de verrouillage empêchent un déplacement de l'élément de recouvrement (14) dans la direction longitudinale du véhicule lorsque celui-ci est pivoté et dans sa position de fermeture et, lors du déplacement de l'élément de recouvrement (14), sont guidés dans un canal de guidage (54) du rail de guidage (28A, 28B) respectif et empêchent l'élément de recouvrement (14) de pivoter.

6. Toit de véhicule selon la revendication 5, **caractérisé en ce que** les éléments de verrouillage (46, 48) coopèrent avec un évidement (50, 52) respectif du rail de guidage (28A, 28B).

7. Toit de véhicule selon l'une quelconque des revendications 1 à 6, **caractérisé en ce que** les chariots d'entraînement (30) sont réalisés respectivement sous forme de pièce moulée par injection de matière plastique.
